# EUROPÄISCHE PATENTSCHRIFT

(11) **EP 0 666 229 B1**
(45) Veröffentlichungstag und Bekanntmachung des Hinweises auf die Patenterteilung: **04.11.1998**
(21) Anmeldenummer: 95100579.2
(22) Anmeldetag: 18.01.1995
(51) Int. Cl.: B65G 47/51

(54) **Vorrichtung zum Puffern eines Packungsstromes in einer Verpackungsmaschine**
Device for accumulating a flow of packages in a packaging machine
Dispositif pour l'accumulation d'un courant d'objets à emballer dans une machine d'emballage

(30) Priorität: 07.02.1994 DE 4403690
(43) Veröffentlichungstag der Anmeldung: 09.08.1995
(73) Patentinhaber: Christian Senning Verpackungsmaschinen GmbH & Co., D-28239 Bremen (DE)
(72) Erfinder: Wach, Jürgen, D-28719 Bremen (DE)
(74) Vertreter: Eisenführ, Speiser & Partner

(56) Entgegenhaltungen:
- EP-A- 0 035 813
- DE-A- 4 119 514
- DE-A- 4 133 574
- GB-A- 2 103 168

## Beschreibung

Die Erfindung betrifft eine Vorrichtung zum Puffern eines Packungsstromes von mit Zwischenräumen aufeinanderfolgenden Packungen zwischen Verarbeitungsstationen einer Verpackungsmaschine, mit einem Packungsspeicher, der mehrere übereinander liegende Speicherebenen zur Aufnahme je einer Reihe von Packungen aufweist, wobei die Packungsreihen zwischen den Speicherebenen durch einen Elevator aufwärts oder abwärts transportiert werden, bei der zum Einspeichern aus einer Hauptförderbahn jeweils eine Mehrzahl von in Förderrichtung hintereinander ankommenden Packungen entnommen und aufgestaut als Packungsreihe ohne Zwischenräume in die unterste Speicherebene des Packungsspeichers eingespeichert wird, und bei der zum Ausspeichern die jeweilige Packungsreihe aus der untersten Speicherebene des Packungsspeichers entnommen und wieder in die Packungsbahn auf der Hauptförderbahn eingeschleust wird.

In Verpackungsmaschinen, z.B. für Papiertaschentücher, ist eine Reihe von Verarbeitungsstationen hintereinander angeordnet, und die entsprechenden Packungen durchlaufen die Maschine mit verhältnismäßig hoher Geschwindigkeit von z.B. 600-700 Packungen pro Minute. Eine solche Reihe von Verarbeitungsstationen enthält z.B. am Anfang eine Falzmaschine, eine Maschine zur Herstellung von Einzelverpackungen, danach folgt ein Tape-Applikator, mit der die Einzelpackungen mit Öffnungstapes (Klebebändern zum Öffnen und Verschließen der Packungen) versehen werden, und es folgt dann schließlich eine Gebinde-Verpackungsmaschine, in der die Packungen zu größeren Gebinden verpackt werden. Alle diese einzelnen Verarbeitungsstationen erfordern in verschiedenen Zeitabständen Materialwechsel, oder es können Störungen in einzelnen Stationen auftreten, so daß dann die gesamte Verpackungslinie stillgesetzt werden müßte, obwohl nur einzelne Stationen betroffen sind.

Es ist daher bereits bekannt, an geeigneter Stelle einer solchen Verpackungslinie einen Packungsspeicher anzuordnen, der die von den stromaufwärts angeordneten Stationen kommenden Packungen aufnimmt und speichert, wenn eine oder mehrere der stromabwärts angeordneten Verarbeitungsstationen gestört ist oder abgeschaltet werden muß. Sobald die stromabwärts angeordneten Stationen wieder betriebsbereit sind, werden die gespeicherten Packungen wieder in den Produktionsfluß eingebracht, damit der Speicher wieder geleert wird. Es versteht sich von selbst, daß in einem solchen Fall die stromabwärts angeordneten Verarbeitungsstationen schneller laufen können müssen als die stromaufwärts angeordneten Stationen. Sind andererseits stromaufwärts angeordnete Stationen gestört oder müssen abgeschaltet werden, so werden im Packungsspeicher gespeicherte Packungen an die stromabwärts angeordneten Stationen geliefert, damit diese nicht leerlaufen müssen. Durch geeignete Bemessung der Speicherkapazität und durch Vorgeben eines geeigneten Vorrats im Packungsspeicher können Unregelmäßigkeiten der vor oder nach dem Packungsspeicher angeordneten Verarbeitungsstationen weitgehend ausgeglichen werden, so daß jede Verarbeitungsstation mit der optimalen Geschwindigkeit weiterarbeiten kann, ohne daß Störungen im Produktionsfluß auftreten.

Aus der DE OS 41 19 514 ist bereits ein Packungsspeicher bekannt, der entsprechend dem Oberbegriff des Anspruches 1 ausgebildet ist. Zum Einspeichern wird eine Weiche in einer Hauptförderbahn für die ankommenden Packungen umgeschaltet, um die Packungen in die unterste Speicherebene des Packungsspeichers einzuspeichern. Beim Ausspeichern werden die Packungen aus der untersten Speicherebene mit einem Förderband in einen Zwischenspeicher transportiert und in kleinen Gruppen in mehreren Etappen ablegt. Über die unterste Etage gelangen die Packungen dann gruppenweise durch einen Rückführförderer in die Hauptförderbahn zurück, wobei der Hauptstrom von ankommenden Packungen dann angehalten werden muß, um die entsprechende Anzahl von Packungen einzuschleusen. Dieser bekannte Packungsspeicher hat jedoch den Nachteil, daß der Produktionsfluß im Speicherbetrieb gestört wird, was insbesondere bei hohen Fördergeschwindigkeiten ungünstig ist. Vor allem besteht das Problem, daß nach einer vorherigen Störung an Stationen der Produktionslinie hinter dem Speicher der Speicher immer mehr gefüllt wird und die Speicherkapazität irgendwann erschöpft ist. Sind dann anschließend alle Stationen der Produktionslinie, insbesondere die hinter dem Speicher liegenden Stationen, wieder voll betriebsbereit, so laufen die Packungsstränge an dem Speicher vorbei, und es ist nicht möglich, den Speicher zu entleeren, damit er für einen neuen Störfall o.dgl. wieder aufnahmebereit ist. Dies kommt daher, daß ein Ausspeichern aus dem Speicher - wie vorstehend beschrieben - nur möglich ist, wenn der Packungsstrom auf der Hauptförderbahn angehalten wird, um Packungen aus dem Speicher gruppenweise einzuschleusen.

Aus der DE-OS-41 33 574 ist ein Vertikalpuffer für auf einem Transportband befördertes Transportgut bekannt, bei dem das Transportgut in einem vertikal angeordneten Gestell mit mehreren Gestellfächern lagert. Eine Entladung dieses Vertikalpuffers erfolgt dadurch, daß die unterste Packungsreihe auf ein Taktband geschoben wird, das taktweise angetrieben wird und anschließend gelangen die Packungen über eine Rutsche auf ein weiterführendes Transportband. Hierbei soll eine Einspeisung in den Materialfluß des vorher außer Betrieb gesetzten und nun wieder in Betrieb genommenen Transportbandes erfolgen, wobei das Herabrutschen und das Ankommen der Packungen auf dem Transportband ziemlich unkritisch ist.

Der vorliegenden Erfindung liegt die Aufgabe zugrunde, eine Vorrichtung zum Puffern eines Packungsstromes mit einem Packungsspeicher zu schaffen, bei der der ankommende Produktionsfluß sowohl beim Einspeichern mit hoher Geschwindigkeit aufgenommen werden kann, als auch beim Ausspeichern die ausgespeicherten Packungen ohne Unterbrechung oder Stau des Produktionsflusses flexibel wieder eingefügt werden können.

Erfindungsgemäß ist die Vorrichtung zum Puffern eines Packungsstromes der eingangs genannten Art dadurch gekennzeichnet, daß im Anschluß an die unterste Speicherebene des Packungsspeichers eine Ausspeichertransportbahn mit der vollen Kapazität bzw. Länge der untersten Speicherebene vorgesehen ist, auf die die unterste Packungsreihe des Packungsspeichers beim Ausspeichern als Ganzes aufgeschoben wird, und daß ein synchron mit den Zwischenräumen zwischen den Packungen des Packungsstromes auf der Hauptförderbahn umlaufendes Einlegerad vorgesehen ist, das mindestens einen Mitnehmerarm aufweist, der die jeweils vorderste Packung auf der Ausspeichertransportbahn erfaßt und nach unten synchron in einen Zwischenraum zwischen aufeinanderfolgenden Packungen auf der Hauptförderbahn einlegt, ohne den laufenden Packungsstrom zu beeinträchtigen, wobei eine Packungssperre die übrigen Packungen auf der Ausspeichertransportbahn anhält.

Ein besonders einfaches Einspeichern der Packungen in den Packungsspeicher ist bei einer vorteilhaften Ausführungsform der vorliegenden Erfindung dadurch möglich, daß beim Einspeichern die Packungen auf der Hauptförderbahn selbst zu einer Packungsreihe aufgestaut und zum Einspeichern durch eine Hebeeinrichtung in die unterste Speicherebene des Packungsspeichers hineingehoben werden. Es muß also nicht wie beim Stand der Technik der ankommende Packungsstrom über eine Weiche zum Einspeichern abgelenkt werden, sondern auf der Hauptförderbahn selbst wird die Packungsreihe aufgestaut, was keine Störung des Produktionsflusses bedeutet, da die ankommende Packungsreihe Zwischenräume zwischen den Packungen aufweist und somit einen geringfügigen, kurzen Stau ohne weiteres verkraftet. Diese Zwischenräume zwischen aufeinanderfolgenden Packungen auf der Hauptförderbahn wird im Speicherbetrieb dadurch erzeugt, daß die Fördergeschwindigkeit der Hauptförderbahn zumindest beim Ausspeichern gegenüber der Geschwindigkeit einer davor liegenden Förderbahn um soviel höher ist, daß Zwischenräume von mehr als einer Packungsbreite zwischen aufeinanderfolgenden Packungen entstehen. Es ist jedoch auch möglich, die Hauptförderbahn im Bereich des Packungsspeichers zu unterteilen und an dieser Stelle die Zwischenräume zwischen aufeinanderfolgenden Packungen durch unterschiedliche Fördergeschwindigkeiten dieser beiden Abschnitte zu erzeugen.

Der Mitnehmerarm des Einlegerades ist zweckmäßigerweise mit einer Saugvorrichtung zum Festhalten der Packung versehen. Das Einlegerad kann zur Aufnahme von einer oder mehrerer Packungen ausgebildet sein. Die Drehzahl wird derart gewählt, daß jeweils eine Packung in jede Lücke, jede zweite Lücke, jede dritte Lücke usw. zwischen den auf der Hauptförderbahn durchlaufenden Packungen eingelegt wird. Die Drehzahl des Einlegerades ist hierbei vorzugsweise wahlweise umschaltbar, um die Anzahl der aus dem Packungsspeicher in den Packungsstrom auf der Hauptförderbahn eingeschleusten Packungen zu variieren. Hierdurch ist es z.B. möglich, den Packungsspeicher während des normalen Produktionsdurchlaufs von Packungen auf der Hauptförderbahn abzubauen, um den Packungsspeicher für spätere Zeiten wieder aufnahmebereit zu machen. Stockt der Packungsstrom auf der Hauptförderbahn jedoch aufgrund von Störungen oder bei Materialwechsel in den stromaufwärts angeordneten Verarbeitungsstationen, so kann eine Ausspeicherung von Packungen aus dem Packungsspeicher mit höchster Geschwindigkeit erfolgen, wobei auch keine Synchronisierung erforderlich ist, da auf der Hauptförderbahn keine weiteren Packungen ankommen.

Die Hebevorrichtung zum Anheben der aufgestauten Packungsreihe beim Einspeichern in den Packungsspeicher besteht vorzugsweise aus einer parallel geführten Plattform, die über ein Hebelgetriebe von einem Pneumatikzylinder oder dergleichen angetrieben wird. Da sich die Länge einer Packungsreihe bei zusammendrückbaren, weichen Packungen nicht genau bestimmen läßt, ist vor der Hebevorrichtung vorzugsweise eine Entspannungsvorrichtung vorgesehen, um die gegen einen steuerbaren Anschlag aufgestaute Packungsreihe in ihrer Länge zu entspannen und zu halten, bevor sie beim Einspeichern in die unterste Speicherebene des Packungsspeichers gehoben wird Die Entspannungsvorrichtung enthält vorzugsweise zwei Greifarme, die von beiden Seiten an die letzte auflaufende Packung aus der Packungsreihe angreifen und diese aus dem Bereich des Packungsspeichers zurückziehen, bevor die Hebevorrichtung die entspannte Packungsreihe in die unterste Speicherebene des Packungsspeichers einspeichert. Die Greifarme sind z.B. auf einer Antriebseinrichtung gelagert und von dieser in Transportrichtung der Packungsbahn angetrieben, und Klemmbacken an den Enden der Greifarme werden beim Zurückziehen der Greifarme entgegen der Transportrichtung der Packungsbahn durch Kurvenbahnführungen in Angreifposition gebracht.

In einer vorteilhaften Ausführungsform sind oberhalb der Hauptförderbahn beidseitig Führungsleisten vorgesehen, die bei normalem Durchlauf der Packungsbahn diese zur untersten Speicherebene nach oben hin abdecken und zum Einspeichern nach oben und nach beiden Seiten hin verschwenkt werden, um dann die von der Hebeeinrichtung nach oben gehobene Packungsreihe seitlich zu führen.

Das Ausschieben der in der untersten Speicherebene des Packungsspeichers gespeicherten Packungsreihe auf die Ausspeichertransportbahn erfolgt vorzugsweise mittels eines längsgeführten Schiebers. Hierdurch ist es möglich, die Packungsreihe besonders schnell und sicher auszuspeichern und durch eine Abwärtsbewegung des Elevators des Packungsspeichers schnell die nächste Packungsebene in Ausspeicherposition zu bringen.

Die Erfindung wird nachfolgend anhand eines Ausführungsbeispieles unter Bezug auf die beigefügten Zeichnungen näher erläutert.

Es zeigen:
- Fig. 1: eine Seitenansicht einer Vorrichtung zum Puffern eines Packungsstromes gemäß der Erfindung, teilweise geschnitten;
- Fig. 2: einen Ausschnitt aus der Gesamtvorrichtung nach Fig. 1;
- Fig. 3: eine Detailansicht einer Entspannungsvorrichtung im Aufriß;
- Fig. 4a + 4b: eine Draufsicht auf die Entspannungsvorrichtung nach Fig. 3 in zwei verschiedenen Positionen;
- Fig. 5: einen Querschnitt durch einen Packungsspeicher der Vorrichtung nach den Fig. 1 und 2;
- Fig. 6: eine Einlegevorrichtung für die Gesamtvorrichtung nach den Fig. 1 und 2 im Aufriß; und
- Fig. 7: eine Draufsicht auf die Einlegevorrichtung nach Fig. 6.

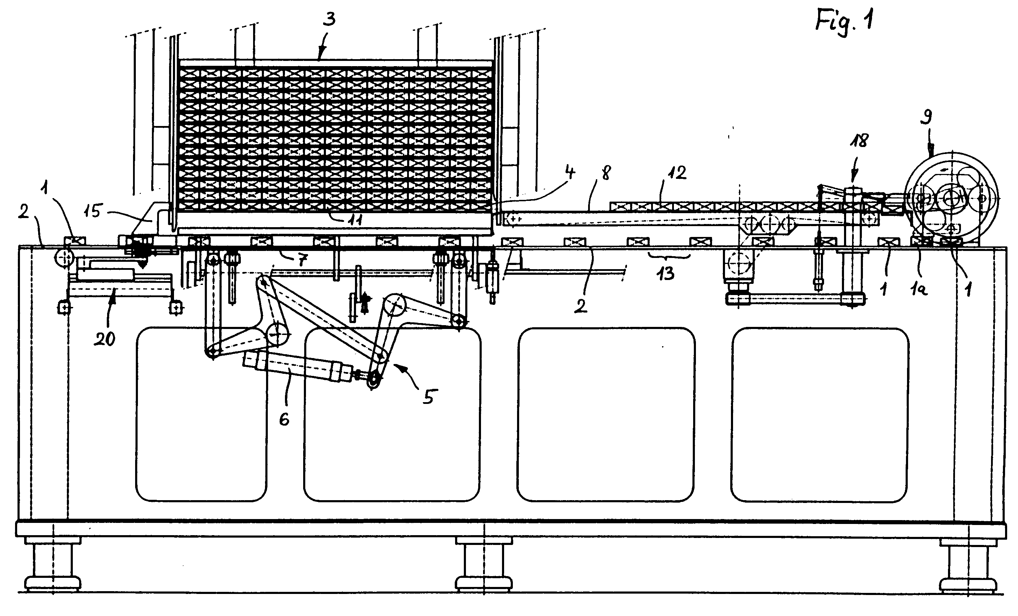

In Fig. 1 ist in Gesamtdarstellung eine Vorrichtung zum Puffern eines Packungsstromes zu sehen. Auf einer Hauptförderbahn 2 kommen Packungen 1, z.B. weiche Taschentuchpackungen, im Abstand voneinander an und laufen normalerweise unter einem Packungsspeicher 3 hindurch zum Ausgang der Baueinheit. Der Packungsspeicher 3 enthält eine Vielzahl von übereinander angeordneten Speicherebenen, wobei eine Einspeicherung in die unterste Speicherebene 4 und auch die Ausspeicherung von dort aus auf eine Ausspeichertransportbahn 8 erfolgt. Beim Ausspeichern wird die in der untersten Speicherebene 4 gespeicherte unterste Packungsreihe 11 als Ganzes durch einen Schieber 15 auf die Ausspeichertransportbahn 8 ausgeschoben. Die einzelnen Packungen dieser ausgeschobenen Packungsreihe 12 werden dann durch eine Einlegevorrichtung in der Form eines Einlegerades 9, das mit einer Packungssperre 18 zusammenarbeitet, in Zwischenräume 13 zwischen den einzelnen Packungen 1 auf der Hauptförderbahn 2 eingelegt. Hierzu müssen die Zwischenräume 13 zwischen aufeinanderfolgenden Packungen 1 größer als die Packungsbreite 14 der einzelnen Packungen 1 sein. Auf geeignete Weise wird sichergestellt, daß die Packungen 1 auf der Hauptförderbahn 2 bereits diesen Mindestzwischenraum 13 voneinander haben. Dies kann z.B. dadurch erfolgen, daß die Transportgeschwindigkeit der Hauptförderbahn 2 gegenüber einer zu fördernden, davorliegenden Förderbahn um soviel höher ist, daß die Zwischenräume 13 sichergestellt sind. Es ist jedoch auch möglich, die Hauptförderbahn 2 im Bereich des Packungsspeichers 3 in zwei mit verschiedenen Geschwindigkeiten fördernde Abschnitte zu unterteilen, um die Zwischenräume 13 sicherzustellen.

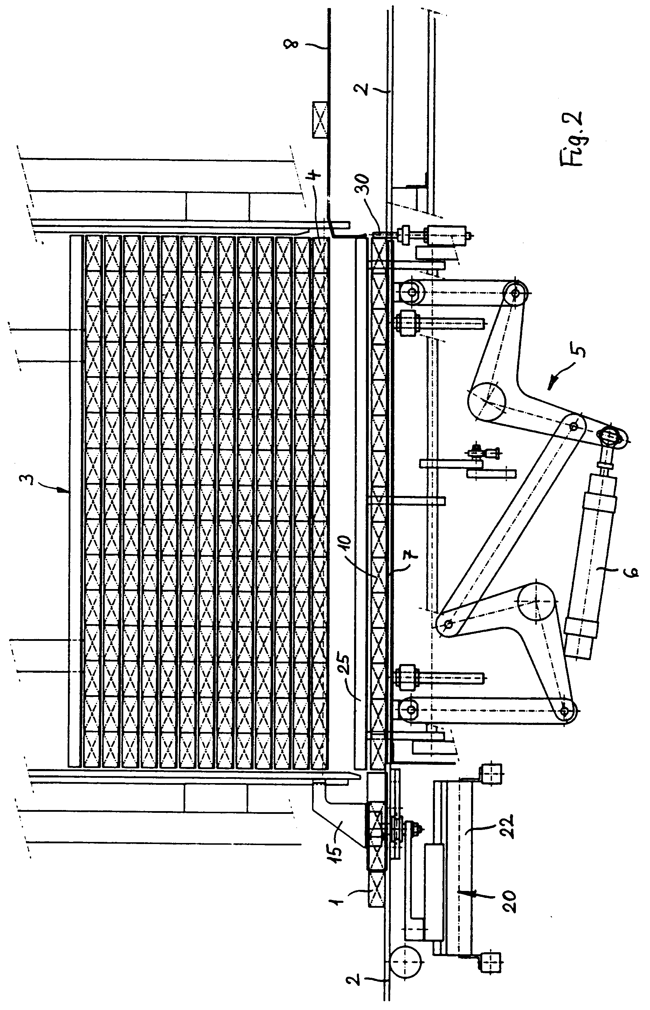

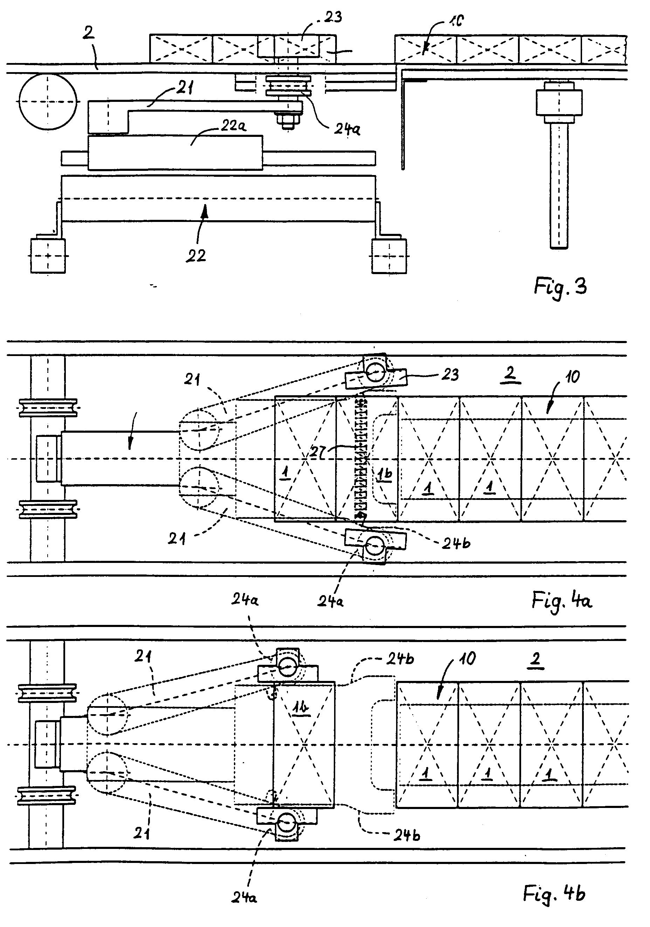

In Fig. 2 ist zu sehen, daß die auf der Hauptförderbahn 2 ankommenden Packungen 1 zu einer Packungsreihe 10 aufgestaut sind, d.h., es sind zwischen den einzelnen Packungen 1 keine Zwischenräume mehr vorhanden. Dies erfolgt zum Zwecke des Einspeicherns in den Packungsspeicher 3 durch Hochfahren eines steuerbaren Anschlages 30 im Endbereich des Packungsspeichers 3 auf der Hauptförderbahn 2. Die im Anfangsbereich des Packungsspeichers 3 vorgesehene Entspannungsvorrichtung 20 greift an der letzten Packung 1 am Anfangsbereich des Packungsspeichers 3 an und zieht diese zusammen mit den folgenden Packungen 1 von der gestauten Packungsreihe 10 zurück. Einzelheiten der Entspannungsvorrichtung 20 werden später noch anhand der Fig. 3, 4a und 4b beschrieben.

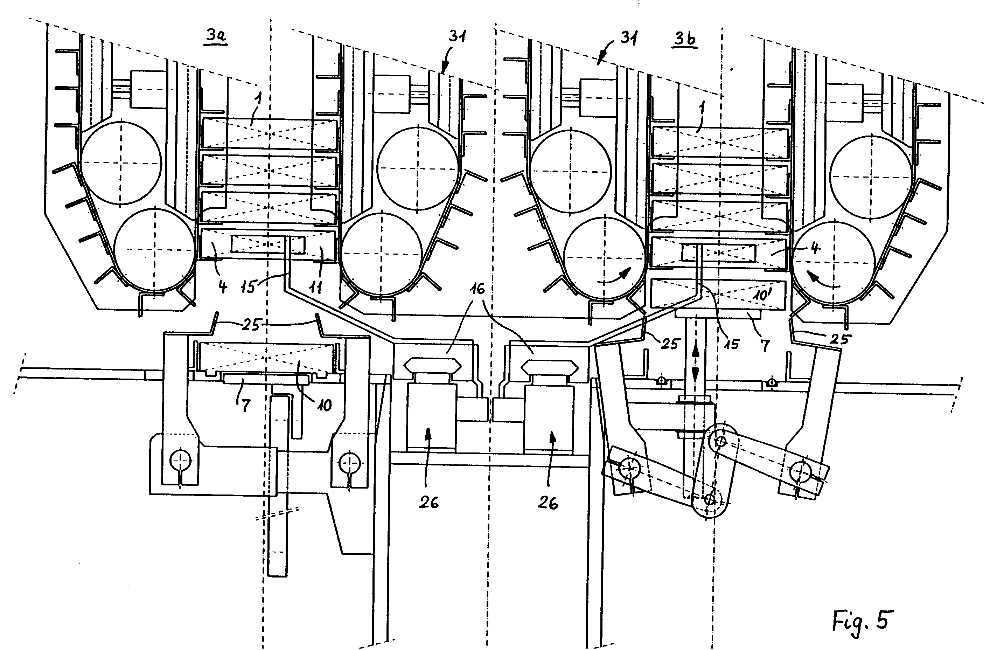

Fig. 5 zeigt im Querschnitt Ausschnitte aus zwei nebeneinander angeordneten Packungsspeichern 3a und 3b, wie sie für eine zweibahnige Verpackungsmaschine vorgesehen sein kann. Beide Packungsspeicher 3a, 3b sind spiegelbildlich zueinander gleich aufgebaut, aber in Fig. 5 sind zwei verschiedene Bewegungsphasen beim Einspeichern gezeigt. Selbstverständlich können die beiden Packungsspeicher 3a und 3b unabhängig voneinander oder auch synchron zueinander arbeiten; die verschiedenen Phasen in den beiden Packungsspeichern 3a und 3b sind nur zur Illustration verschieden gezeigt.

Die linke Bahn nach Fig. 5 zeigt die in Fig. 2 dargestellte Phase, in der auf der Hauptförderbahn 2 gerade die gestaute Packungsreihe 10 liegt. Die Packungsreihe 10 wird durch Führungsleisten 25 nach oben hin abgedeckt (siehe Fig. 5), so daß sie also nicht versehentlich nach oben ausweichen kann. In der untersten Speicherebene 4 befindet sich bereits eine vorher eingespeicherte Packungsreihe 11. Als nächstes wird nun eine unterhalb der gestauten Packungsreihe 10 angeordnete Plattform 7, die sich über die volle Länge der gestauten Packungsreihe 10 befindet, durch eine Parallelführung geführt, angehoben, wie es im rechten Teil der Fig. 5 zu sehen ist. Das Anheben der parallel geführten Plattform 7 erfolgt über ein Hebelgetriebe 5 mittels eines Pneumatikzylinders 6 (siehe Fig. 2).

Sobald die angehobene, gestaute Packungsreihe 10' sich unterhalb der untersten Speicherebene 4 befindet, fördert ein Elevator 31 des Packungsspeichers 3b die in der untersten Speicherebene 4 gerade befindliche Packungsreihe nach oben, so daß die unterste Speicherebene 4 für die gerade angehobene Packungsreihe 10' frei wird. Wie auch im rechten Teil der Fig. 5 zu sehen ist, sind die Führungsleisten 25 gegenüber der im linken Teil dargestellten Position nach Fig. 5 zur Seite und nach oben geschwenkt und bilden hierbei gleichzeitig seitliche Führungen, damit die angehobene Packungsreihe 10' nicht seitlich ausweichen kann. Das gleichzeitige Verschwenken der Führungsleisten 25 erfolgt durch eine entsprechendes Hebelgetriebe, wie im rechten Teil der Fig. 5 gezeigt ist. Nachdem die angehobene, gestaute Packungsreihe 10' von Tragewinkeln des Elevators 31 erfaßt sind, wird die Plattform 7 durch den Antrieb 5, 6 wieder nach unten gezogen, um für ein neues Einspeichern bereit zu sein. Gleichzeitig schwenken die Führungsleisten 25 wieder nach innen, wie insgesamt im linken Teil der Fig. 5 gezeigt ist.

Die in den Fig. 3, 4a und 4b dargestellte Entspannungsvorrichtung 20 weist eine Antriebseinrichtung 22 in Form eines Pneumatikzylinders mit innenliegender Kolbenstange auf. Auf einem von der Antriebseinrichtung 22 betätigten Betätigungsteil 22a sind nebeneinander (siehe Fig. 4a und 4b) zwei Greifarme 21 schwenkbar gelagert und werden durch eine Zugfeder 27 aufeinander zu vorgespannt. An den Enden der Greifarme 21 sind Klemmbacken 23 vorgesehen, die von den Seiten her an den Packungen 1 angreifen sollen.

Fig. 4a zeigt die (in der Zeichnung) rechte Endposition der Entspannungsvorrichtung 20, während die Fig. 3 und 4b die linke Endposition darstellen. Die freien Enden der Greifarme 21 bzw. die darauf schwenkbar gelagerten Klemmbacken 23 werden durch Kurvenbahnführungen 24 entgegen der Kraft der Feder 27 auseinandergedrückt (Position nach Fig. 4a), indem an den Enden der Greifarme 21 angeordnete Kugellager 24a auf Kurvenbahnen 24b abrollen. Sobald nun die Greifarme 21 durch die Antriebseinrichtung 22 (in der Zeichnung gesehen) aus der Position von Fig. 4a in die Position nach Fig. 4b nach links bewegt werden, rollen die Kugellager 24a auf den Kurvenbahnen 24b ab und die Klemmbacken 23 bewegen sich auf die Packung 1b der gestauchten Packungsreihe 10 zu und erfassen diese von beiden Seiten (Position nach Fig. 4a). In Fig. 4b ist zu sehen, daß die weiter nach links bewegten Klemmbacken 23 die Packung 1b aus dem linken Endbereich der Packungsreihe 10 fortbewegt haben, wodurch sich die Packungsreihe 10, die vorher gestaut wurde, entspannen kann. Jetzt besteht keine Gefahr mehr, daß beim Hochheben dieser Packungsreihe 10 in die unterste Speicherebene 4 des Packungsspeichers 3 irgendwelche Verklemmungen auftreten können.

Für das Ausspeichern der untersten Packungsreihe 11 aus der untersten Speicherebene 4 des Packungsspeichers 3 ist ein Schieber 15 vorgesehen (siehe Fig. 1, 2 und 5), der mittels eines Schlittens 16 auf einer Parallelführung 26 über die volle Länge des Packungsspeichers 3 geführt ist. Dieser Schlitten 16 wird von einem entsprechend ausgebildeten Antriebszylinder angetrieben. Wie aus Fig. 1 zu sehen, ist auf die Ausspeichertransportbahn 8 eine gesamte Packungsreihe 12 aufgeschoben worden. Nach einem solchen Ausschieben einer gesamten Packungsreihe 12 wird durch den Elevator 31 dieses Packungsspeichers 3 die darüberliegende Packungsreihe nach unten in die unterste Speicherebene 4 bewegt, damit anschließend entweder diese nächste Packungsreihe ausgespeichert werden kann, oder der nächste Einspeichervorgang in der vorher beschriebenen Weise erfolgen kann.

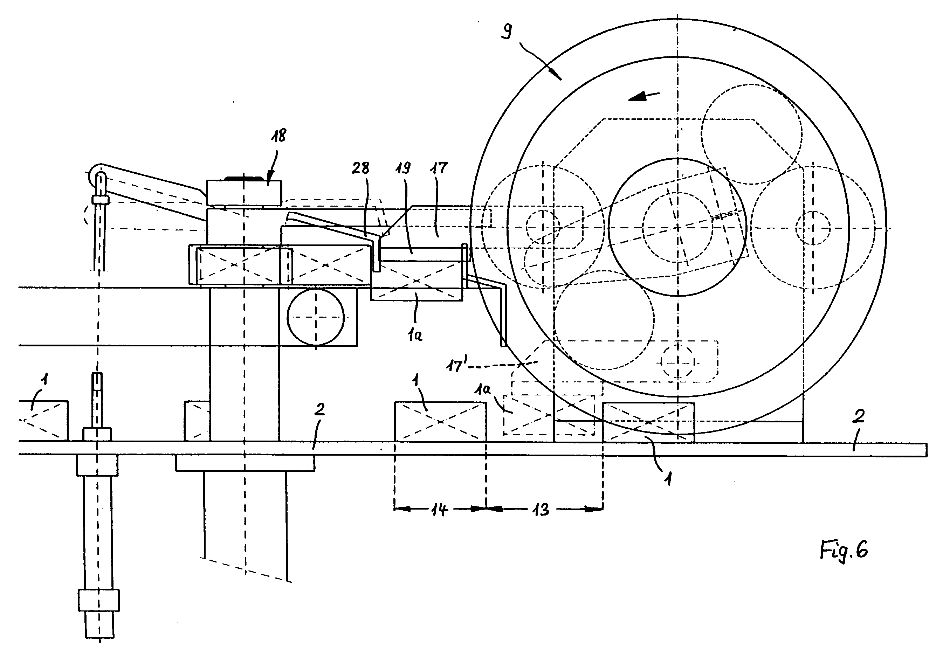

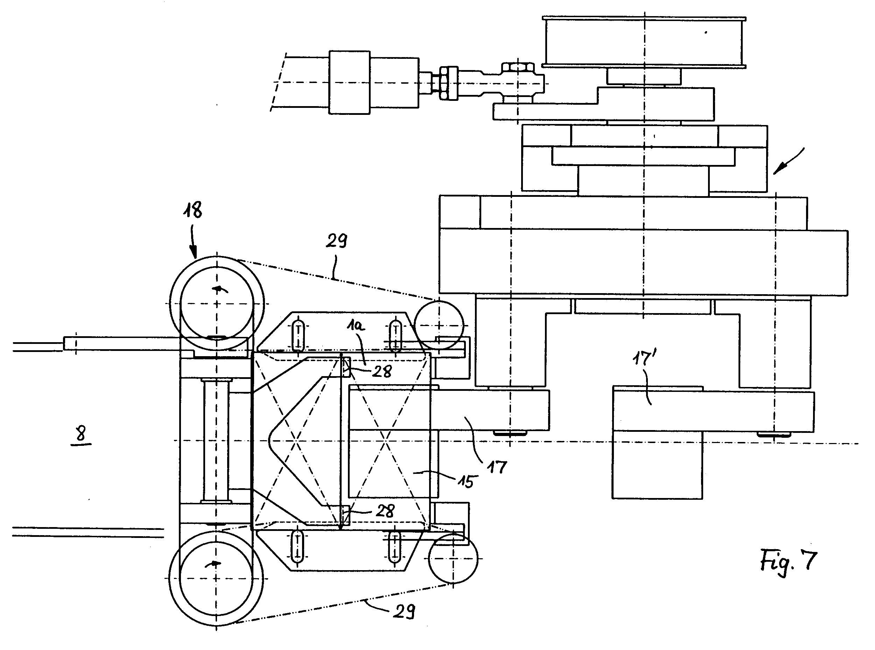

Nachfolgend soll anhand der Fig. 6 und 7 das Einlegen von auf der Ausspeichertransportbahn 8 ankommenden Packungen 1 beschrieben werden. Wie bereits erwähnt, ist vor dem Einlegerad 9 eine Packungssperre 18 angeordnet. Diese Packungssperre 18 weist einen durch eine entsprechende Betätigungseinrichtung gesteuerten Finger 28 auf, der die erste Packung der ausgeschobenen Packungsreihe 12 anhält. Das Einlegerad 9 weist einen oder mehrere, schwenkbar aufgehängte Mitnehmerarme 17, 17' auf, die sich beim Drehen des Einlegerades 9 in Pfeilrichtung von oben hin auf die Packungen, hier eine Packung 1a, zubewegen. Die Mitnehmerarme 17, 17' sind mit Saugplatten 19 versehen, die die Packung 1a von oben her festhalten. Im weiteren Verlauf der Drehbewegung des Einlegerades 19 gelangt somit die ergriffene Packung 1a nach unten in den Bereich der Hauptförderbahn 2 (strichpunktierte Position), und zwar in den Zwischenraum 13 zwischen zwei aufeinanderfolgenden Packungen 1, die auf der Hauptförderbahn 2 transportiert werden.

Vorher wurde ausgeführt, daß die ausgeschobene Packungsreihe 12 durch den Finger 28 der Packungssperre 18 angehalten wird. Damit eine Packung 1a in den Angriffsbereich der Mitnehmerarme 17 des Einlegerades 9 gelangen kann, wird der Finger 28 kurzzeitig angehoben, und die vorderste Packung wird mittels eines reibungsschlüssig angreifenden Transportbandes 29 (siehe Fig. 7) in den Bereich der Mitnehmerarme 17 befördert und von diesem nach unten bewegt.

Das Einlegen von Packungen 1a durch die Mitnehmerarme 17 des Einlegerades 9 muß genau mit den Zwischenräumen 13 zwischen auf der Hauptförderbahn 2 ankommenden Packungen synchronisiert sein. Es muß nun nicht in jede Lücke zwischen zwei aufeinanderfolgenden Packungen 1 eine Packung 1a eingelegt werden, sondern es ist auch möglich, in jede zweite Lücke, dritte Lücke usw. Packungen 1a einzulegen, je nach der gewünschten Geschwindigkeit, mit der der Packungsspeicher 3 entladen werden muß, und auch je nach der Verarbeitungskapazität der nachfolgenden Verarbeitungsstationen. An dem Einlegerad 9 kann entweder nur ein Mitnehmerarm 17 angeordnet sein, zweckmäßig ist es jedoch, eine Mehrzahl im gleichen Winkelabstand voneinander vorzusehen. Die Drehzahl des Einlegerades 9 kann je nach der gewünschten Einlegegeschwindigkeit, aber synchron mit den Zwischenräumen 13 der auf der Hauptförderbahn 2 ankommenden Packungen 1 umschaltbar ausgeführt sein. Kommen auf der Hauptförderbahn 2 keinerlei Packungen 1 an, z.B. im Falle einer Störung der davorliegenden Verarbeitungsstationen, so kann das Einlegerad 9 mit höchster Geschwindigkeit laufen, und es ist auch keine Synchronisierung mit der Hauptförderbahn 2 erforderlich.

## Patentansprüche

1. Vorrichtung zum Puffern eines Packungsstromes von mit Zwischenräumen aufeinanderfolgenden Packungen (1) zwischen Verarbeitungsstationen einer Verpackungsmaschine, mit einem Packungsspeicher (3), der mehrere übereinander liegende Speicherebenen zur Aufnahme je einer Reihe von Packungen (1) aufweist, wobei die Packungsreihen zwischen den Speicherebenen durch einen Elevator (31) aufwärts oder abwärts transportiert werden;
bei der zum Einspeichern aus einer Hauptförderbahn (2) jeweils eine Mehrzahl von in Förderrichtung hintereinander ankommenden Packungen (1) entnommen und aufgestaut als Packungsreihe ohne Zwischenräume in die unterste Speicherebene (4) des Packungsspeichers (3) eingespeichert wird; und
bei der zum Ausspeichern die jeweilige Packungsreihe aus der untersten Speicherebene (4) des Packungsspeichers (3) entnommen und wieder in die Packungsbahn auf der Hauptförderbahn (2) eingeschleust wird;
dadurch gekennzeichnet,
daß im Anschluß an die unterste Speicherebene (4) des Packungsspeichers (3) eine Ausspeichertransportbahn (8) mit der vollen Kapazität bzw. Länge der untersten Speicherebene (4) vorgesehen ist, auf die die unterste Packungsreihe (11) des Packungsspeichers (3) beim Ausspeichern als Ganzes (12) aufgeschoben wird; und daß ein synchron mit den Zwischenräumen (13) zwischen den Packungen (1) des Packungsstromes auf der Hauptförderbahn (2) umlaufendes Einlegerad vorgesehen ist, das mindestens einen Mitnehmerarm (17) aufweist, der die jeweils vorderste Packung (1) auf der Ausspeichertransportbahn (8) erfaßt und nach unten synchron in einen Zwischenraum (13) zwischen aufeinanderfolgenden Packungen (1) auf der Hauptförderbahn (2) einlegt, ohne den laufenden Packungsstrom zu beeinträchtigen, wobei eine Packungssperre (18) die übrigen Packungen (1) auf der Ausspeichertransportbahn (8) anhält.

2. Vorrichtung nach Anspruch 1,
dadurch gekennzeichnet, daß beim Einspeichern die Packungen (1) auf der Hauptförderbahn (2) selbst zu einer Packungsreihe (10) aufgestaut und zum Einspeichern durch eine Hebeeinrichtung (5, 6, 7) in die unterste Speicherebene (4) des Packungsspeichers (3) hineingehoben werden.

3. Vorrichtung nach Anspruch 1 oder 2,
dadurch gekennzeichnet, daß die Fördergeschwindigkeit der Hauptförderbahn (2) beim Ausspeichern gegenüber der Geschwindigkeit einer davor liegenden Förderbahn um soviel höher ist, daß Zwischenräume (13) von mehr als einer Packungsbreite (14) zwischen aufeinanderfolgenden Packungen (1) entstehen.

4. Vorrichtung nach Anspruch 1,
dadurch gekennzeichnet, daß der Mitnehmerarm (17) mit einer Saugvorrichtung (19) zum Festhalten der Packung (1a) versehen ist.

5. Vorrichtung nach einem der Ansprüche 1 bis 4,
dadurch gekennzeichnet, daß das Einlegerad (9) zur Aufnahme von einer oder mehrerer Packungen (1a) ausgebildet ist und die Drehzahl derart gewählt ist, daß jeweils eine Packung (1a) in jede, jede zweite, jede dritte Lücke (13), usw. zwischen den auf der Hauptförderbahn (2) durchlaufenden Packungen (1) eingelegt wird.

6. Vorrichtung nach Anspruch 5,
dadurch gekennzeichnet, daß die Drehzahl des Einlegerades (9) wahlweise umschaltbar ist, um die Anzahl der aus dem Packungsspeicher (3) in den Packungsstrom auf der Hauptförderbahn (2) eingeschleusten Packungen (1a) zu variieren.

7. Vorrichtung nach einem der Ansprüche 2 bis 6,
dadurch gekennzeichnet, daß die Hebevorrichtung (5, 6, 7) zum Anheben der aufgestauten Packungsreihe (10) aus einer parallel geführten Plattform (7) besteht, die über ein Hebelgetriebe (5) von einem Pneumatikzylinder (6) angetrieben wird.

8. Vorrichtung nach einem der Ansprüche 2 bis 7,
dadurch gekennzeichnet, daß vor der Hebevorrichtung (5, 6, 7) eine Entspannungsvorrichtung (20) vorgesehen ist, um die gegen einen steuerbaren Anschlag (30) aufgestaute Packungsreihe (10) in ihrer Länge zu entspannen und zu halten, bevor sie beim Einspeichern in die unterste Speicherebene (4) des Packungsspeichers (3) gehoben wird.

9. Vorrichtung nach Anspruch 8,
dadurch gekennzeichnet, daß die Entspannungsvorrichtung (20) zwei Greifarme (21) aufweist, die von beiden Seiten an die letzte auflaufende Packung (1) aus der Packungsreihe angreifen und diese aus dem Bereich des Packungsspeichers (3) zurückziehen, bevor die Hebevorrichtung (5, 6, 7) die entspannte Packungsreihe in die unterste Speicherebene (4) des Packungsspeichers (3) einspeichert.

10. Vorrichtung nach Anspruch 9,
dadurch gekennzeichnet, daß die Greifarme (21) auf einer Antriebseinrichtung (22) gelagert und von dieser in Transportrichtung der Packungsbahn angetrieben sind, und daß Klemmbacken (23) an den Enden der Greifarme (21) beim Zurückziehen der Greifarme entgegen der Transportrichtung der Packungsbahn durch Kurvenbahnführungen (24) in Angreifposition gebracht werden.

11. Vorrichtung nach einem der Ansprüche 2 bis 10,
dadurch gekennzeichnet, daß oberhalb der Hauptförderbahn (2) beidseitig Führungsleisten (25) vorgesehen sind, die bei normalem Durchlauf der Packungsbahn diese zur untersten Speicherebene (4) nach oben hin abdecken und zum Einspeichern nach oben und nach beiden Seiten hin verschwenkt werden, um dann die von der Hebeeinrichtung (5, 6, 7) nach oben gehobene Packungsreihe seitlich zu führen.

12. Vorrichtung nach einem der vorstehenden Ansprüche,
dadurch gekennzeichnet, daß das Ausschieben der in der untersten Speicherebene (4) des Packungsspeichers (3) gespeicherten Packungsreihe (11) auf die Ausspeichertransportbahn (8) mittels eines längsgeführten Schiebers (15) erfolgt.

## Claims

1. A device for buffering a package flow of successively spaced packages (1) between processing stations of a packaging machine, having a package store (3) which has a plurality of storage levels, lying one above another, for receiving in each case a row of packages (1), the package rows being transported upwards or downwards between the storage levels by means of an elevator (31);
in which in each case a plurality of packages (1) arriving one behind another in the conveying direction are taken from a main conveyor belt (2) for storing and are stored in the bottom storage level (4) of the package store (3) such that they are packed together without spacings as package rows; and
in which, for removal from the store, the respective package row is taken from the bottom storage level (4) of the package store (3) and is filtered into the package line on the main conveyor belt (2) again;
characterized in that, adjoining the bottom storage level (4) of the package store (3), a transport belt (8) for removal from the store is provided which has the total capacity and length of the bottom storage level (4), and onto which the bottom package row (11) of the package store (3) is pushed when an entire row (12) is removed from the store; and in that an insertion wheel is provided, which rotates synchronously with the spacings (13) between the packages (1) of the package flow on the main conveyor belt (2), and has at least one driver arm (17) which takes hold of the in each case front package (1) on the removal transport belt (8) and inserts it synchronously downwards into a spacing (13) between successive packages (1) on the main conveyor belt (2) without adversely affecting the moving package flow, during which a package-blocking means (18) stops the remaining packages (1) on the removal transport belt (8).

2. A device according to Claim 1, characterized in that, during storing, the packages (1) are packed together on the main conveyor belt (2) itself to form a package row (10), and, for storing, are lifted into the bottom storage level (4) of the package store (3) by a lifting means (5, 6, 7).

3. A device according to Claim 1 or 2, characterized in that, during removal from the store, the conveying speed of the main conveyor belt (2) is greater than the speed of a conveyor belt lying upstream by an amount such that spacings (13) of more than one package width (14) appear between successive packages (1).

4. A device according to Claim 1, characterized in that the driver arm (17) is provided with a suction device (19) for retaining the package (1a).

5. A device according to one of Claims 1 to 4, characterized in that the insertion wheel (9) is constructed for receiving one or more packages (1a) and the rotational speed is selected such that in each case one package (1a) is inserted into every gap (13), every second gap, every third gap etc. between the packages (1) moving through on the main conveyor belt (2).

6. A device according to Claim 5, characterized in that the rotational speed of the insertion wheel (9) may optionally be changed in order to vary the number of packages (1a) filtered into the package flow on the main conveyor belt (2) from the package store (3).

7. A device according to one of Claims 2 to 6, characterized in that the lifting device (5, 6, 7) for lifting the packed-together package row (10) comprises a platform (7) which is guided in parallel manner and is driven by a pneumatic cylinder (6) by way of a lever mechanism (5).

8. A device according to one of Claims 2 to 7, characterized in that a stress-relieving device (20) is provided upstream of the lifting device (5, 6, 7) in order to relieve stress in the length of the package row (10) which is packed together against a controllable stop (30), and to hold said package row before it is lied into the bottom storage level (4) of the package store (3) during storing.

9. A device according to Claim 8, characterized in that the stress-relieving device (20) has two gripping arms (21) which act from both sides on the last incoming package (1) from the package row and draw it back from the region of the package store (3) before the lifting device (5, 6, 7) stores the unstressed package row in the bottom storage level (4) of the package store (3).

10. A device according to Claim 9, characterized in that the gripping arms (21) are mounted on a drive means (22) and are driven by the latter in the direction of transport of the package line, and in that clamping jaws (23) at the ends of the gripping arms (21) are brought into an active position by means of curved-path guides (24) when the gripping arms are drawn back in opposition to the direction of transport of the package line.

11. A device according to one of Claims 2 to 10, characterized in that guide strips (25) are provided on each side above the main conveyor path (2), which guide strips cover the package line from top to bottom when it runs through normally to the bottom storage level (4), and, for storing, are pivoted upwards and towards both sides in order then to laterally guide the package row which is lifted upwards by the lifting device (5, 6, 7).

12. A device according to one of the preceding claims, characterized in that the package row (11) which is stored in the bottom storage level (4) of the package store (3) is pushed out onto the removal transport belt (8) by means of a longitudinally guided slide means (15).

## Revendications

1. Dispositif pour l'accumulation d'un courant d'objets à emballer (1) se succédant à intervalles entre des stations de traitement d'une machine d'emballage, comportant une unité de stockage d'objets à emballer (3) qui présente plusieurs niveaux de stockage disposés les uns au-dessus des autres pour la réception respectivement d'une rangée d'objets à emballer (1), les rangées d'objets à emballer étant transportées vers le haut ou vers le bas entre les niveaux de stockage par un élévateur (31),
dans lequel, pour le stockage, plusieurs objets à emballer (1) arrivant les uns derrière les autres dans le sens de transport sont prélevés respectivement sur une trajectoire principale de transport (2) et retenus en tant que rangée d'objets à emballer, sont stockés sans intervalle au niveau de stockage (4) le plus bas de l'unité de stockage d'objets à emballer (3) et
dans lequel, pour l'extraction, la rangée respective d'objets à emballer est prélevée du niveau de stockage (4) le plus bas de l'unité de stockage d'objets à emballer (3) et réintroduite sur la voie d'emballage sur la trajectoire principale de transport (2),
caractérisé en ce que, à la suite du niveau de stockage (4) le plus bas de l'unité de stockage d'objets à emballer (3), il est prévu une trajectoire de transport d'extraction (8) présentant la pleine capacité et la longueur du niveau de stockage (4) le plus bas et sur laquelle la rangée d'objets à emballer (11) la plus basse de l'unité de stockage d'objets à emballer (3) est chargée en tant qu'unité lors de l'extraction et en ce qu'il est prévu une roue d'insertion qui tourne de manière synchrone avec les intervalles (13) entre les objets à emballer (1) du courant d'objets à emballer sur la trajectoire principale de transport (2) et présente au moins un bras d'entraînement (17) qui saisit l'objet à emballer (1) respectivement le plus en avant sur la trajectoire de transport d'extraction (8) et l'insère vers le bas de manière synchrone dans un intervalle (13) entre les objets à emballer (1) successifs sur la trajectoire principale de transport (2) sans entraver le courant d'objets à emballer, un blocage d'objets à emballer (18) arrêtant les autres objets à emballer (1) sur la trajectoire de transport d'extraction (8).

2. Dispositif selon la revendication 1, caractérisé en ce que lors du stockage, les objets à emballer (1) sont retenus sur la trajectoire principale de transport (2) elle-même pour former une rangée d'objets à emballer (10) et pour le stockage, sont introduits au niveau de stockage (4) le plus bas de l'unité de stockage d'objets à emballer (3) par un dispositif de levage (5, 6, 7).

3. Dispositif selon la revendication 1 ou 2, caractérisé en ce que la vitesse de transport de la trajectoire principale de transport (2) lors de l'extraction est d'autant plus élevée par rapport à la vitesse d'une trajectoire de transport précédente qu'il se forme des intervalles (13) de plus d'une largeur d'objet à emballer (14) entre les objets à emballer (1) successifs.

4. Dispositif selon la revendication 1, caractérisé en ce que le bras d'entraînement (17) est équipé d'un dispositif d'aspiration (19) pour maintenir l'objet à emballer (1a).

5. Dispositif selon l'une quelconque des revendications 1 à 4, caractérisé en ce que la roue d'insertion (9) est conçue pour la réception d'un ou de plusieurs objets à emballer (1a) et en ce que la vitesse de rotation est choisie de telle sorte que respectivement un objet à emballer (1a) est introduit dans chaque intervalle (13), un intervalle sur deux, un intervalle sur trois, etc. entre les objets à emballer (1) parcourant la trajectoire principale de transport (2).

6. Dispositif selon la revendication 5, caractérisé en ce que la vitesse de rotation de la roue l'insertion (9) est commutable au choix afin de varier le nombre d'objets à emballer (1a) insérés à partir de l'unité de stockage d'objets à emballer (3) dans le courant d'objets à emballer sur la trajectoire principale de transport (2).

7. Dispositif selon l'une quelconque des revendications 2 à 6, caractérisé en ce que le dispositif de levage (5, 6, 7) destiné au levage de la rangée d'objets à emballer (10) retenue comprend une plate-forme (7) guidée en parallèle et entraînée par un cylindre pneumatique (6) par l'intermédiaire d'un mécanisme de transmission à levier (5).

8. Dispositif selon l'une quelconque des revendications 2 à 7, caractérisé en ce que, avant le dispositif de levage (5, 6, 7), il est prévu un dispositif de détente (20) pour détendre sur sa longueur, la rangée d'objets à emballer (10) retenue contre une butée (30) commandable avant qu'elle ne soit levée lors du stockage au niveau de stockage (4) le plus bas de l'unité de stockage d'objets à emballer (3).

9. Dispositif selon la revendication 8, caractérisé en ce que le dispositif de détente (20) présente deux bras de préhension (21) qui s'appliquent des deux côtés contre le dernier objet à emballer (1) arrivant de la rangée d'objets à emballer et retirent ladite rangée de la zone de l'unité de stockage d'objets à emballer (3) avant que le dispositif de levage (5, 6, 7) ne stocke la rangée d'objets à emballer détendue, au niveau de stockage (4) le plus bas de l'unité de stockage d'objets à emballer (3).

10. Dispositif selon la revendication 9, caractérisé en ce que les bras de préhension (21) sont montés sur un dispositif d'entraînement (22) et sont entraînés par ce dernier, dans le sens de transport de la voie d'emballage et en ce que des mâchoires de serrage (23) aux extrémités des bras de préhension (21) sont mises en position d'attaque par des guidages pour la trajectoire incurvée (24) lors du retrait des bras de préhension à l'encontre du sens de transport de la voie d'emballage.

11. Dispositif selon l'une quelconque des revendications 2 à 10, caractérisé en ce que, au-dessus de la trajectoire principale de transport (2) sont prévues, des deux côtés, des barres de guidage (25) qui lors du passage normal sur la voie d'emballage, couvrent cette dernière vers le haut, vers le niveau de stockage (4) le plus bas et qui pour le stockage, pivotent vers le haut et vers les deux côtés pour guider ensuite latéralement la rangée d'objets à emballer levée vers le haut par le dispositif de levage (5, 6, 7).

12. Dispositif selon l'une quelconque des revendications précédentes, caractérisé en ce que l'extraction de la rangée d'objets à emballer (11) stockée au niveau de stockage (4) le plus bas de l'unité de stockage d'objets à emballer (3) a lieu sur la trajectoire de transport d'extraction (8) au moyen d'un coulisseau (15) guidé dans le sens longitudinal.
